# DEMANDE DE BREVET EUROPEEN

(11) **EP 1 043 523 A1**
(43) Date de publication de la demande: **11.10.2000**
(21) Numéro de dépôt: 00201218.5
(22) Date de dépôt: 04.04.2000
(51) Int. Cl.: F16J 15/06

(54) **Nouveau procédé d'étanchéification, nouveau joint pour composants de systèmes de transfert de fluides, notamment tubulures, et leurs applications notamment dans des pompes et circuits pour fluides spéciaux**

(30) Priorité: 08.04.1999 FR 9904505
(71) Demandeur: Norton Asti S.A., 92741 Nanterre (FR)
(72) Inventeur: Ménagé, Frédéric, 71000 Macon (FR)
(74) Mandataire: Richebourg, Michel François

(57) **Abrégé**

L'invention concerne un nouveau système de joint permettant de résoudre notamment le problème de la contamination de fluides spéciaux véhiculés dans des pompes, et assurant de plus une meilleure étanchéité du fait de sa géométrie et de sa conception particulières.

Selon l'invention, l'une des pièces à raccorder peut remplacer le joint du fait que le système de joint comprend la combinaison des deux pièces à raccorder 1 et 2 avec une rondelle fine 200, l'une des pièces à raccorder présentant une géométrie (1, 150, 180) propre à réaliser une double empreinte sur la rondelle.

Applications notamment aux pompes et aux circuits pour fluides de l'industrie des semi-conducteurs. Les trois pièces du système de joint - corps de pompe 2, tubulure (1, 150) et rondelle 200- peuvent alors être réalisées en PFA.

## Description

La présente invention concerne le secteur technique des joints d'étanchéité compris dans les systèmes de transfert de fluide, et plus particulièrement des joints pour tubulures et de manière générale circuits véhiculant des fluides spéciaux.

Par fluides spéciaux, on entend dans la présente demande des fluides requérant l'emploi de matériaux spéciaux. Un exemple non limitatif est donné par les fluides corrosifs. On désignera également sous ce vocable des fluides ne devant être en aucun cas contaminés par les composants de systèmes de transfert de fluides. Un exemple non limitatif est fourni par certains fluides utilisés dans l'industrie des semi-conducteurs.

La présente invention concerne également le secteur technique des tubulures, pompes et autres composants de systèmes de transfert de fluide pour fluides spéciaux utilisant de tels joints, et notamment le secteur techniques de telles pompes comportant de telles tubulures d'entrée ou de sortie. Un exemple non limitatif est fourni par les pompes et tubulures en matière fluorée.

Dans l'industrie des semi conducteurs, on utilise couramment des fluides définis ici comme 〈〈 spéciaux 〉〉. Il peut s'agir notamment de bases, d'acides, de solvants, d'eau ou de fluides aqueux contenant des matières abrasives, et analogues bien connus de l'homme du métier.

Un problème technique d'une sévérité particulière est posé par la circulation de fluides tels que des acides qui sont ensuite utilisés pour graver les plaques de silicium servant à la production de semi-conducteurs. Toute pollution, et notamment toute pollution particulaire du fluide véhiculé, est totalement néfaste pour la qualité du semi-conducteur.

Cependant, les systèmes servant à véhiculer de tels fluides, et notamment les pompes et les tubulures, ont un besoin impératif de joints d'étanchéité, comme tout système de ce type.

On connaît dans ce domaine des joints métalliques de section étudiée pour assurer au mieux l'étanchéité.

On connaît surtout dans ce domaine des joints toriques bien connus sous le vocable de 〈〈 O-ring 〉〉. Ces joints toriques sont, de manière connue, placés dans des gorges ou logements puis sont comprimés par un collet, ce qui assure l'étanchéité. Dans le cas d'un joint entre deux tubulures, ou d'un joint au niveau d'un raccord tubulure / corps de pompe, ou autre composant d'un système de transfert de fluide, le serrage est effectué par le moyen d'une bague de serrage opérée manuellement.

De tels joints, dans le secteur technique considéré, sont essentiellement constitués en matériaux élastomères. Ceux-ci sont cependant susceptibles de conduire à une contamination particulaire des fluides véhiculés. Ils présentent en effet une pureté notoirement insuffisante et peuvent libérer des particules métalliques ou autres, extrêmement dommageables dans les industries 〈〈 ultrapures 〉〉 comme l'industrie des semi-conducteurs.

Le problème se pose notamment avec acuité dans les pompes en matière fluorée telles que décrites ci-dessus, qui comportent des tubulures devant être raccordées de manière étanche au moyen de joints.

L'invention concerne un nouveau système formant joint et permettant de résoudre les problèmes évoqués ci-dessus, notamment le problème de la contamination des fluides véhiculés, et assurant de plus une meilleure étanchéité du fait de sa géométrie et de sa conception particulières. D'autres caractéristiques et avantages de l'invention apparaîtront mieux à la lecture de la description qui va suivre, et en se référant au dessin annexé, sur lequel:
- la figure 1 représente une vue en coupe d'un élément de pompe pour fluides spéciaux, notamment une pompe dite 〈〈 chimique ultrapure 〉〉 notamment pour l'industrie des semi-conducteurs, présentant un système formant joint selon l'invention;
- la figure 2 représente en coupe un agrandissement d'une partie de la figure 1, montrant un mode de réalisation du système formant joint selon l'invention et les pièces qui l'entourent;
- la figure 3 représente en coupe schématique un mode de réalisation du système formant joint selon l'invention tel qu'utilisé sur les figures 1 et 2.
- la figure 4, qui se compose des figures 4 a et 4 b, représente en coupe schématique deux modes d'étanchéification selon l'art antérieur, relevant de la technologie des vannes.

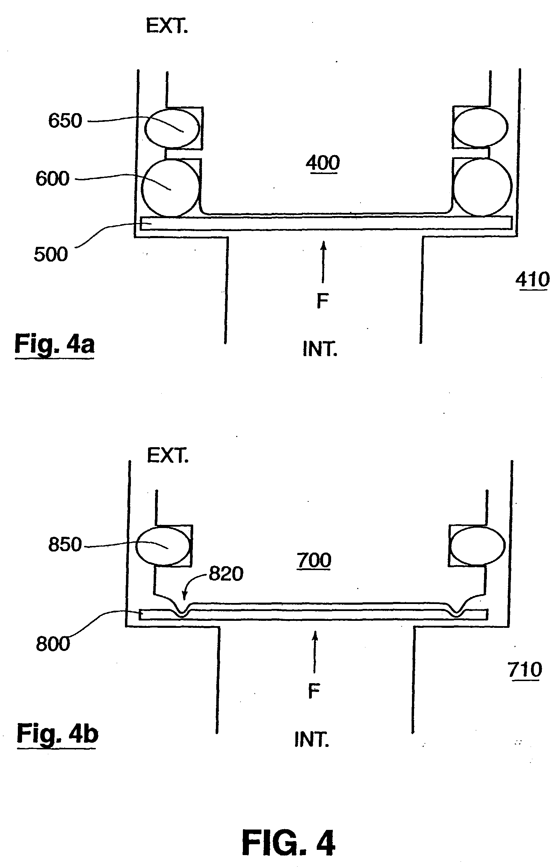

Sur les figures annexées, les mêmes références ont les mêmes significations, qui sont les suivantes:
- 1: tubulure
- 2: corps de pompe
- 3: soufflet de pompe
- 4: logement de joint de corps de pompe
- 5: joint de corps de pompe selon la demande de brevet déposée le même jour que la présente demande, au nom du Demandeur
- 100: bague de serrage
- 110: logement du joint de tubulure selon l'invention
- 150: joint de tubulure selon l'invention , comportant une partie inférieure 170 et coopérant avec
- 200: rondelle ou lame fine d'étanchéité selon l'invention au niveau de la zone d'empreinte 190.
- 400 et 700: éléments fixes des vannes de l'art antérieur
- 410 et 710: corps de vanne de l'art antérieur
- 500 et 800: rondelles d'étanchéité pour vannes de l'art antérieur
- 600, 650, 850: joints classiques élastomères du type O-ring ou analogue
- 820: cannelure
- F et flèche: sens de pression du fluide sur le système de joint
- F1 et flèche: première voie de passage du fluide vers l'extérieur
- F2 et flèche: seconde voie de passage du fluide vers l'extérieur
- B et flèche: sens d'application de la force de la bague de serrage.
- INT.: intérieur de la pompe (fluide sous pression) (ou de la vanne sur la Figure 4)
- EXT.: extérieur de la pompe (ou de la vanne sur la Figure 4)

Dans toute la présente demande, les abréviations ont les significations suivantes:
- PTFE: polytétrafluoroéthylène
- PVDF: polyfluorure de vinylidène
- PFA: polyfluoroalkoxy

Par commodité, les descriptions seront données, pour orienter les figures et leurs références numériques, par rapport à 〈〈 l'intérieur 〉〉 de la pompe et à, respectivement, 〈〈 l'extérieur 〉〉.

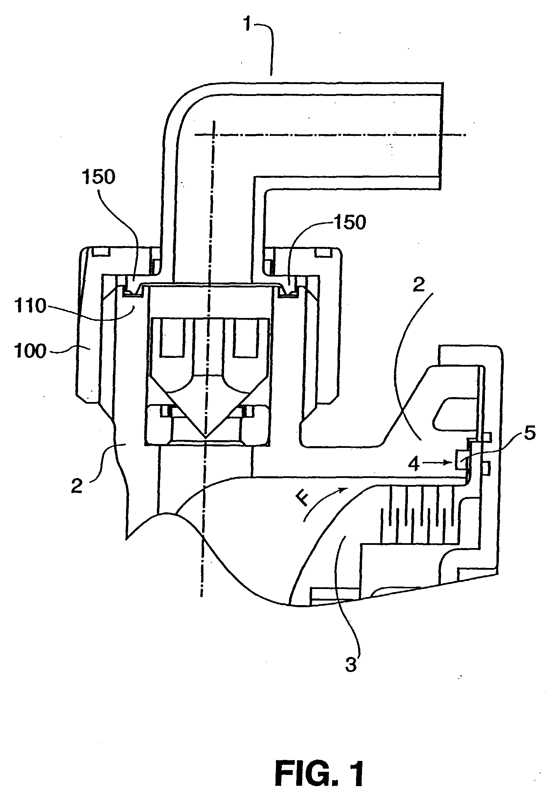

Comme on le voit sur la figure 1, un logement 110 est aménagé de manière connue dans le corps de pompe 2.

L'étanchéité doit être assurée au niveau du joint 150 pour éviter les fuites de fluide F vers l'extérieur par les chemins F1 ou F2.

L'invention concerne de manière générale un procédé d'étanchéification entre une pièce 2 en matériau relativement dur, comportant un logement 110 pour joint, et une pièce 1 destinée à être appliquée contre ledit joint par un moyen de serrage 100, selon lequel on emploie comme joint un système complexe formé par la combinaison i) d'un joint 150 solidaire de la pièce 1, ou appuyé sur la pièce 1, et réalisé en matériau relativement dur, ii) d'une rondelle ou lame fine 200 réalisée en matériau relativement dur, ledit joint 150 comportant une protubérance d'appui 180 sur sa face 170 destinée à coopérer dans la zone d'empreinte 190 avec la rondelle ou la lame fine 200, et iii) le fond du logement 110, également réalisé en matériau relativement dur.

Selon un mode de réalisation préféré, le joint 150 se présente en section transversale comme une forme asymétrique fermée comportant à la base une forme en 〈〈 V 〉〉 qui forme une protubérance 180 par rapport à la partie inférieure 170, la forme en 〈〈 V 〉〉 présentant de préférence un contour arrondi comme représenté sur le dessin annexé, et n'occupant de manière asymétrique qu'une partie de la face inférieure 170, également comme représenté, tandis que l'une des branches du 〈〈 V 〉〉 se poursuit de manière asymétrique en formant une des parois latérales du joint 150.

L'homme de métier saura envisager facilement d'autres formes proches capables de présenter la même fonction, notamment la fonction de coopération avec la rondelle 200 dans la zone d'empreinte 190.

De manière préférée, les trois matériaux seront identiques pour la pièce 2 (c'est à dire le fond du logement 110), le joint 150 et la rondelle ou lame fine 200.

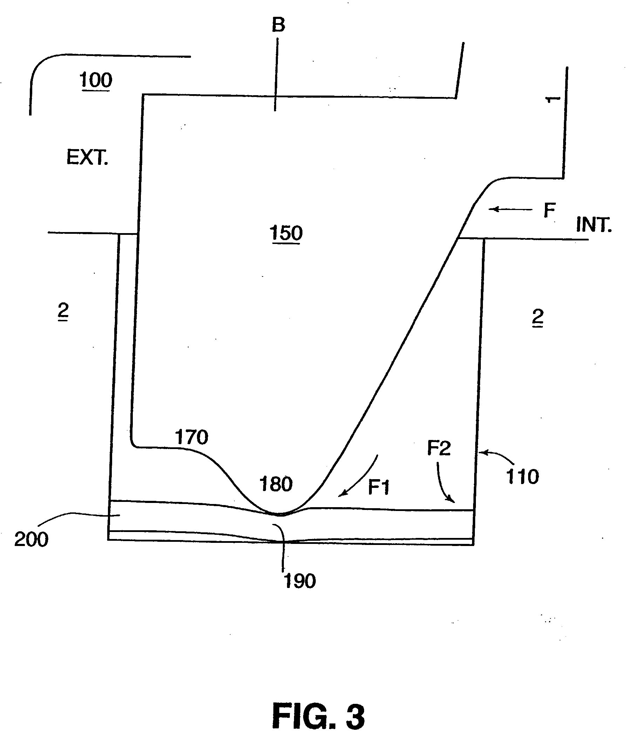

Comme on le voit sur la figure 3, la protubérance 180 est destinée à former une double empreinte dans la zone 190 de la rondelle ou lame fine 200, assurant deux lignes d'étanchéité contre les chemins F1 et F2.

Selon un mode de réalisation préféré de l'invention, le matériau constitutif de la pièce 2, du joint 150 et de la rondelle ou lame fine 200 est un PFA.

On peut également envisager l'emploi de polymères dont les caractéristiques de dureté et de résistance à la compression se situent dans une fourchette allant des caractéristiques du PFA à celles du PVDF.

Selon un mode particulier de réalisation, le PFA est un PFA commercialisé par Du Pont de Nemours sous le nom Teflon PFA (TM).

Les valeurs de résistance à la compression au seuil d'écoulement selon la norme ASTM D 695 sont respectivement de:

24 MPa pour le Teflon PFA (TM) - matériau relativement dur - et de 12 MPa pour le Teflon PTFE (TM) - matériau relativement mou ou souple.

Les valeurs de dureté Shore D selon la norme ASTM D 2240 seraient respectivement de:

60 pour le Teflon PFA (TM) - matériau relativement dur - et de 55 pour le Teflon PTFE (TM) qui est un matériau relativement souple ou mou.

Une FEP (résine fluor éthylène-propylène) présenterait à titre comparatif une résistance à la compression de 15,2 MPa et une dureté Shore de 56 - 57, selon les mêmes normes.

Un PVDF (polyfluorure de vinylidène) présente une résistance à la compression de 75 MPa et une dureté Shore de 77, selon les mêmes normes.

Ces valeurs permettront à l'homme de métier d'apprécier ce que l'on entend selon l'invention par matériau 〈〈 relativement dur 〉〉, en relation avec la différence de valeur de résistance à la compression et du dureté Shore D qui, quoique semblant numériquement faible, est importante. L'homme de métier saura ainsi sélectionner les matériaux appropriés, ainsi que déterminer les domaines acceptables de 〈〈 dureté 〉〉 .

Dans l'art antérieur, on connaît encore deux systèmes pour technologie de vannes qui sont tels que représentés sur les figures 4a et 4b.

Sur la Figure 4a, l'étanchéité est assurée par deux joints latéraux classiques, de type joint torique ou 〈〈 O-ring 〉〉 en élastomère, et par une rondelle 500 qui repose sur le siège de la vanne. Comme on le voit, la pression du fluide s'exerce sur le dessous de la rondelle.

Sur la figure 4b, l'étanchéité est assurée par un joint torique latéral classique et par une rondelle 800 sur laquelle est serré l'élément fixe de la vanne 700 par l'intermédiaire d'une cannelure 820 qui marque la rondelle de son empreinte. La pression du fluide s'exerce, sur la figure 4b également, sur le dessous de la rondelle 800.

Dans les deux cas, le corps de vanne 410 ou 710 et la rondelle 500 ou 800 sont en PFA. Par contre, les éléments fixes des vannes 400 et 700 sont en un matériau plus dur que le PFA, qui est le PVDF.

Il n'était donc pas évident que la technologie de la figure 4b notamment soit transposable à une technologie pour tubulures, notamment en matières fluorées, car dans le cas des tubulures considérées selon l'invention, la pression du fluide s'exerce sur le dessus, et non pas le dessous, de la rondelle ou lame fine. En outre l'élément d'appui de la figure 4b est plus dur que le PFA de la rondelle. Le comportement à l'étanchéité était donc doublement imprévisible. Le fait que les vannes des figures 4a et 4b existent depuis 10 ou 20 ans, alors que le problème posé par l'étanchéité des raccords de tubulures pour fluides spéciaux n'a toujours pas été résolu, confirme d'ailleurs que la technologie ne s'imposait absolument pas à l'homme de métier, alors que le besoin existait.

De manière préférée selon l'invention, le joint 150 en matériau relativement dur sera en fait le prolongement de la pièce 1 que l'on doit raccorder de manière étanche à la pièce 2. Dans l'art antérieur utilisant des joints souples en élastomère, il était évidemment impossible de réaliser par exemple une tubulure en le même matériau élastomère. Cela devient possible selon l'invention, puisque les trois composants de la combinaison formant joint sont réalisés en matériau relativement dur.

Selon une variante moins préférée de l'invention, les trois composants seront en un matériau relativement dur, avec les pièces 110 et / ou 150 pouvant être plus dures que la pièce 200.

Si la rondelle 200 n'est pas assez dure, le système fuit.

L'un des avantages importants de l'invention est donc de remplacer le joint par un simple prolongement de l'une des pièces à raccorder. En fait, la présente invention, dans son mode de réalisation préféré, supprime le joint proprement dit et fait jouer ce rôle à l'une des pièces à raccorder.

L'homme de métier comprendra que cette variante préférée de l'invention est tout à fait contraire à l'enseignement de l'art antérieur, que ce soit dans le domaine des vannes que des pompes ou tubulures en matières fluorées.

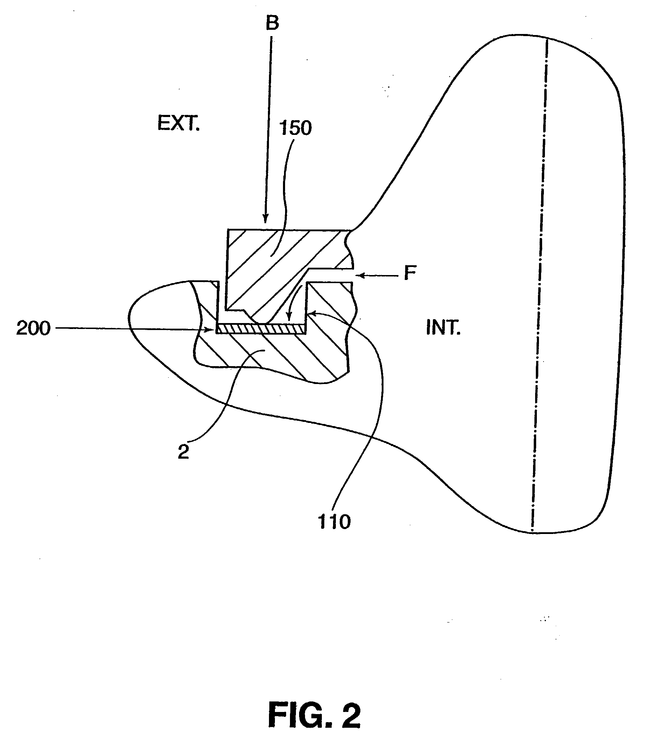

Selon le mode de réalisation préféré de la figure 1 ou 2, la pièce 2 sera un corps de pompe, notamment de pompe en matière fluorée relativement dure telle que PFA, et la pièce 1, solidaire du joint 150 qui en est un simple prolongement, est une tubulure d'entrée ou de sortie réalisée en PFA, tandis que la rondelle ou lame fine 200 est également en PFA.

On a montré par des essais comparatifs que, sans la rondelle ou lame fine 200, le système selon l'invention fuit. Les deux pièces à raccorder (notamment, dans l'exemple préféré, corps de pompe 2 et tubulure 1 prolongée par la pièce 150) coopèrent donc bien avec la rondelle ou lame fine 200. Ces essais montrent également que, de manière surprenante, l'étanchéité du système selon l'invention dépend d'une rondelle qui n'aurait pas logiquement dû jouer ce rôle décisif et qui, si l'on se réfère notamment à l'art antérieur de la figure 4, devait coopérer antérieurement avec un ou plusieurs joints en élastomère.

L'intérêt de la rondelle fine 200 vient aussi du fait qu'elle est l'unique pièce déformée, et donc la seule pièce à remplacer lors d'une maintenance.

L'invention concerne encore les systèmes formant joint qui viennent d'être décrits, dans toutes leurs variantes.

L'invention concerne encore les applications du procédé selon l'invention et des systèmes formant joint selon l'invention dans toutes les industries présentant des critères rigoureux ou même drastiques d'étanchéification, comme les industries des semi-conducteurs, l'industrie électronique de manière générale, l'aéronautique et l'espace, l'industrie pharmaceutique, la chimie, les nouvelles technologies et analogues.

En particulier, l'invention concerne les pompes et tubulures destinées à véhiculer des fluides spéciaux, en particulier des fluides corrosifs, et/ou en particulier des fluides ne devant pas être contaminés par le joint d'étanchéité, caractérisées en ce qu'elles comportent au moins un système d'étanchéité ou système formant joint tel que décrit ci dessus, et notamment caractérisées en ce que les deux pièces à raccorder sont directement utilisées pour participer au système formant joint.

L'invention concerne encore les variantes de mise en oeuvre, de réalisation, de sélection des matériaux, et des applications et utilisations qui seront directement accessibles à l'homme de métier à la lecture de la présente description.

## Revendications

1. Procédé d'étanchéification entre une pièce 2 en matériau relativement dur, comportant un logement 110 pour joint, et une pièce 1 destinée à être appliquée contre ledit joint par un moyen de serrage 100, caractérisé en ce que on emploie comme joint un système complexe formé par la combinaison i) d'un joint 150 solidaire de la pièce 1, ou appuyé sur la pièce 1, et réalisé en matériau relativement dur, ii) d'une rondelle ou lame fine 200 réalisée en matériau relativement dur, ledit joint 150 comportant une protubérance d'appui 180 sur sa face 170 destinée à coopérer dans la zone d'empreinte 190 avec la rondelle ou la lame fine 200, et iii) le fond du logement 110, également réalisé en matériau relativement dur.

2. Procédé d'étanchéification selon la revendication 1, caractérisé on ce que le joint 150 se présente en section transversale comme une forme asymétrique fermée comportant à la base une forme en 〈〈 V 〉〉 qui forme une protubérance 180 par rapport à la partie inférieure 170, la forme on 〈〈 V 〉〉 présentant de préférence un contour arrondi et n'occupant de manière asymétrique qu'une partie de la face inférieure 170, tandis que l'une des branches du 〈〈 V 〉〉 se poursuit de manière asymétrique en formant une des parois latérales du joint 150.

3. Procédé d'étanchéification selon la revendication 1 ou 2, caractérisé en ce que les trois matériaux sont identiques pour la pièce 2 (c'est à dire le fond du logement 110), le joint 150 et la rondelle ou lame fine 200.

4. Procédé d'étanchéification selon l'une quelconque des revendications 1 à 3 , caractérisé en ce que la protubérance 180 est destinée à former une double empreinte dans la zone 190 de la rondelle ou lame fine 200, assurant deux lignes d'étanchéité contre les chemins F1 et F2, où la pression du fluide s'applique sur le dessus de la rondelle ou lame fine 200.

5. Procédé d'étanchéification selon l'une quelconque des revendications 1 à 4, caractérisé en ce que le matériau constitutif de la pièce 2 , du joint 150 et de la rondelle ou lame fine 200 est un PFA.

6. Procédé d'étanchéification selon l'une quelconque des revendications 1 à 4, caractérisé en ce que le matériau constitutif de la pièce 2, du joint 150 et de la rondelle ou lame fine 200 est un polymère dont les caractéristiques de dureté et de résistance à la compression se situent dans une fourchette allant des caractéristiques du PFA à celles du PVDF.

7. Procédé d'étanchéification selon l'une quelconque des revendications 1 à 6, caractérisé en ce que le matériau constitutif de la pièce 2, du joint 150 et de la rondelle ou lame fine 200 est un PFA commercialisé par Du Pont de Nemours sous le nom Teflon PFA (TM).

8. Procédé d'étanchéification selon l'une quelconque des revendications 1 à 7, caractérisé en ce que le joint 150 en matériau relativement dur sera en fait le prolongement de la pièce 1 que l'on doit raccorder de manière étanche à la pièce 2.

9. Procédé d'étanchéification selon l'une quelconque des revendications 1 à 8, caractérisé en ce que la pièce 2 est un corps de pompe, notamment de pompe on matière fluorée relativement dure telle que PFA, et la pièce 1, solidaire du joint 150 qui en est un simple prolongement est une tubulure d'entrée ou de sortie réalisée on PFA, tandis que la rondelle ou lame fine 200 est également en PFA.

10. Procédé selon l'une quelconque des revendications 1 et 4 à 9, caractérisé on ce que les pièces 2 et 150 sont plus dures que la rondelle ou lame fine 200.

11. Procédé selon l'une quelconque des revendications 1 à 10, caractérisés en ce que:
- les valeurs de résistance à la compression au seuil d'écoulement selon la norme ASTM D 695 et de dureté Shore D selon la norme ASTM D 2240 sont respectivement de:
- 24 MPa et 60 pour le Teflon PFA (TM)
- 75 Mpa et 77 pour un PVDF (polyfluorure de vinylidène) selon les mêmes normes

12. Systèmes formant joint, pour pompes et tubulures, caractérisé en ce que l'on emploie comme joint un système complexe formé par la combinaison i) d'un joint 150 solidaire de la pièce 1, ou appuyé sur la pièce 1, et réalisé en matériau relativement dur, ii) d'une rondelle ou lame fine 200 réalisée en matériau relativement dur, ledit joint 150 comportant une protubérance d'appui 180 sur sa face 170 destinée à coopérer dans la zone d'empreinte 190 avec la rondelle ou la lame fine 200, et iii) le fond du logement 110, également réalisé en matériau relativement dur.

13. Systèmes formant joint, pour pompes et tubulures, selon la revendication 12, caractérisés en ce que le joint 150 se présente en section transversale comme une forme asymétrique fermée comportant à la base une forme en 〈〈 V 〉〉 qui forme une protubérance 180 par rapport à la partie inférieure 170, la forme en 〈〈 V 〉〉 présentant de préférence un contour arrondi et n'occupant de manière asymétrique qu'une partie de la face inférieure 170, tandis que l'une des branches du 〈〈 V 〉〉 se poursuit de manière asymétrique en formant une des parois latérales du joint 150.

14. Systèmes formant joint, pour pompes et tubulures, selon l'une quelconque des revendications 12 à 13 caractérisés en ce que les trois matériaux sont identiques pour la pièce 2 (c'est à dire le fond du logement 110), le joint 150 et la rondelle ou lame fine 200.

15. Systèmes formant joint, pour pompes et tubulures, selon l'une quelconque des revendications 12 à 14 caractérisés en ce que la protubérance 180 est destinée à former une double empreinte dans la zone 190 de la rondelle ou lame fine 200, assurant deux lignes d'étanchéité contre les chemins F1 et F2, où la pression du fluide s'applique sur le dessus de la rondelle ou lame fine 200.

16. Systèmes formant joint, pour pompes et tubulures, selon l'une quelconque des revendications 12 à 15 caractérisés on ce que le matériau constitutif de la pièce 2, du joint 150 et de la rondelle ou lame fine 200 est un PFA.

17. Systèmes formant joint, pour pompes et tubulures, selon l'une quelconque des revendications 12 à 16 caractérisés en ce que le matériau constitutif de la pièce 2, du joint 150 et de la rondelle ou lame fine 200 est un polymère dont les caractéristiques de dureté et de résistance à la compression se situent dans une fourchette allant des caractéristiques du PFA à celles du PVDF.

18. Systèmes formant joint, pour pompes et tubulures, selon l'une quelconque des revendications 12 à 17 caractérisés en ce que le matériau constitutif de la pièce 2, du joint 150 et de la rondelle ou lame fine 200 est un PFA commercialisé par Du Pont de Nemours sous le nom Teflon PFA (TM).

19. Systèmes formant joint, pour pompes et tubulures, selon l'une quelconque des revendications 12 à 18 caractérisés en ce que le joint 150 en matériau relativement dur sera en fait le prolongement de la pièce 1 que l'on doit raccorder de manière étanche à la pièce 2.

20. Systèmes formant joint, pour pompes et tubulures, selon l'une quelconque des revendications 12 à 19 caractérisés en ce que la pièce 2 est un corps de pompe, notamment de pompe en matière fluorée relativement dure telle que PFA, et la pièce 1, solidaire du joint 150 qui en est un simple prolongement, est une tubulure d'entrée ou de sortie réalisée en PFA, tandis que la rondelle ou lame fine 200 est également en PFA.

21. Systèmes formant joint, pour pompes et tubulures, selon l'une quelconque des revendications 12 à 20 caractérisés en ce que les pièces 2 et 150 sont plus dures que la rondelle ou lame fine 200.

22. Systèmes formant joint selon l'une quelconque des revendications 12 à 21 caractérisé en ce que:
- les valeurs de résistance à la compression au seuil d'écoulement selon la norme ASTM D 695 et de dureté Shore D selon la norme ASTM D 2240 sont respectivement de:
24 MPa et 60 pour le Teflon PFA (TM)
75 Mpa et 77 pour un PVDF (polyfluorure de vinylidène) selon les mêmes normes.

23. Systèmes de transferts de fluides, caractérisés en ca qu'ils comportent au moins un système formant un joint selon l'une quelconque des revendications 12 à 22.

24. Pompes et tubulures destinées à véhiculer des fluides spéciaux, en particulier des fluides corrosifs, et/ou on particulier des fluides ne devant pas être contaminés par le joint d'étanchéité, caractérisées en ce qu'elles comportent au moins un système formant joint selon l'une quelconque des revendications 10 à 22.

25. Pompes et tubulures selon la revendication 24, caractérisées en ce que les trois matériaux sont identiques pour la pièce 2 (c'est à dire le fond du logement 110), le joint 150 et la rondelle ou lame fine 200.

26. Pompes et tubulures selon la revendication 24 ou 25, caractérisées en ce que la protubérance 180 est destinée à former une double empreinte dans la zone 190 de la rondelle ou lame fine 200, assurant deux lignes d'étanchéité contre les chemins F1 et F2.

27. Pompes et tubulures selon l'une quelconque des revendications 24 à 26, caractérisées en ce que le matériau constitutif de la pièce 2, du joint 150 et de la rondelle ou lame fine 200 est un PFA.

28. Pompes et tubulures selon l'une quelconque des revendications 24 à 27, caractérisés en ce que le matériau constitutif de la pièce 2, du joint 150 et de la rondelle ou lame fine 200 est un polymère dont les caractéristiques de dureté et de résistance à la compression se situent dans une fourchette allant des caractéristiques du PFA à celles du PVDF.

29. Pompes et tubulures selon l'une quelconque des revendications 24 à 28, caractérisés en ce que le matériau constitutif de la pièce 2, du joint 150 et de la rondelle ou lame fine 200 est un PFA commercialisé par Du Pont de Nemours sous le nom Teflon PFA (TM).

30. Pompes et tubulures selon la revendication 24 à 29, caractérisées en ce que les deux pièces à raccorder sont directement utilisées pour participer au système formant joint.

31. Applications du procédé, des pompes et tubulures, et des systèmes formant joint selon l'une quelconque des revendications 1 à 22 et 24 à 30, dans les industries des semi-conducteurs, l'industrie électronique de manière générale, l'aéronautique et l'espace, l'industrie pharmaceutique, la chimie, les nouvelles technologies.
